# EUROPÄISCHE PATENTSCHRIFT

(11) **EP 2 171 548 B1**
(45) Veröffentlichungstag und Bekanntmachung des Hinweises auf die Patenterteilung: **07.09.2011**
(21) Anmeldenummer: 08775137.6
(22) Anmeldetag: 16.07.2008
(51) Int. Cl.: G05B 9/02

(54) **STELLEINRICHTUNG FÜR EIN AUF/ZU-VENTIL**
ADJUSTMENT DEVICE FOR AN OPEN-CLOSE VALVE
DISPOSITIF DE RÉGLAGE POUR UNE SOUPAPE MARCHE/ARRÊT

(30) Priorität: 20.07.2007 DE 102007034060
(43) Veröffentlichungstag der Anmeldung: 07.04.2010
(73) Patentinhaber: Siemens Aktiengesellschaft, 80333 München (DE)
(72) Erfinder: HEER, Klaus-Peter, 76863 Herxheim (DE); HIRSCH, Volker, 76889 Steinfeld (DE)
(86) Internationale Anmeldenummer: PCT/EP2008/059316
(87) Internationale Veröffentlichungsnummer: WO 2009/013205

(56) Entgegenhaltungen:
- WO-A-02/082193
- DE-A1-102005 004 477
- DE-A1-102006 003 750
- DE-C1- 19 502 212
- US-A1- 2006 219 299

## Beschreibung

Die Erfindung betrifft eine Stelleinrichtung für ein Auf/Zu-Ventil, mit einem pneumatischen Antrieb, der in Abhängigkeit von dem Vorliegen oder Nichtvorliegen einer von einem Leitsystem lieferbaren Steuerspannung belüftet oder entlüftet wird und das Ventil bei Belüftung in eine Betriebsstellung und bei Entlüftung in eine Sicherheitsstellung bewegt, und mit einem elektro-pneumatischen Stellungsregler, der zur Durchführung eines Partial-Stroke-Tests das Ventil kurzzeitig über einen Teil seines Stellweges in eine Soll-Position bewegt, dabei die Ist-Position des Ventils erfasst und in Abhängigkeit von der Ist-Position und der Soll-Position eine pneumatische Stellgröße für den pneumatischen Antrieb erzeugt.

US 2006/219 299 beschreibt ein System zur Notausschaltung einer Vorrichtung.

Bei einer derartigen aus der DE 10 2006 003 750 A1 oder der DE 10 2005 004 477 A1 bekannten Stelleinrichtung wird ein pneumatisches Auf/Zu-Ventil, insbesondere ein Notabschalt-(ESD = Emergency Shut Down)-Ventil, mittels eines pneumatischen Antriebs entweder in eine Betriebsstellung, z. B. "auf", oder eine Sicherheitsstellung, z. B. "zu", gebracht. Ein Magnetventil, das mit einer von einem Leitsystem gelieferten Steuerspannung angesteuert wird, verbindet den pneumatischen Antrieb mit einer Druckluftversorgung. Im Notfall wird die Steuerspannung abgeschaltet, um den pneumatischen Antrieb über das Magnetventil zu entlüften, so dass das Ventil aus der Betriebsstellung in die Sicherheitsstellung bewegt wird.

Um die Funktionsfähigkeit der Stelleinrichtung im Rahmen eines Partial-Stroke-Tests überprüfen zu können, ist ein zusätzlicher Stellungsregler an dem pneumatischen Antrieb ange- , baut. Bei dem Partial-Stroke-Test wird das Ventil mittels des Stellungsreglers aus der Betriebsstellung über einen Teil seines Stellweges bewegt und anschließend wieder zurückbewegt. Die Stellungsänderung ist dabei so gering, dass der laufende Betrieb der Anlage, in der das Stellventil eingebaut ist, nicht unterbrochen werden muss und nur unwesentlich gestört wird. Während des Partial-Stroke-Tests wird die Stellbewegung erfasst und abgespeichert.

Bei der bekannten Stelleinrichtung ist neben dem Magnetventil der Stellungsregler als weiteres Aggregat mit entsprechender Verdrahtung und Verrohrung an der aus Ventil und Antrieb bestehenden Armatur angebaut. Außerdem muss in dem Leitsystem für die Ansteuerung des Stellungsreglers eine Analogausgangsbaugruppe bereitgestellt werden, die z. B. ein 4-20 mA-Signal liefert, um den Sollwert für die Ventilregelung zu übermitteln. Dies ist sowohl in materieller als auch finanzieller Hinsicht ein hoher zusätzlicher Aufwand. Hinzu kommt, dass zwar die Armatur mittels des Stellungsreglers und des von ihm durchgeführten Partial-Stroke-Tests getestet werden kann, das Magnetventil aber eines weiteren Testverfahrens bedarf.

Die genannten Probleme sind zu einem geringen Teil bei der aus der oben genannten DE 10 2005 004 477 A1 bekannten Stelleinrichtung gelöst, bei der das Magnetventil in dem Gehäuse des Stellungsreglers integriert ist. Allerdings ist die separate Magnetventilfunktion immer noch erforderlich und es wird eine Analogausgabebaugruppe im Leitsystem benötigt, die den Sollwert für den Stellungsregler liefert. Der Test des Magnetventils ist ebenfalls weiter erforderlich.

Gemäß der Erfindung wird das Problem dadurch gelöst, dass bei der Stelleinrichtung der eingangs angegebenen Art der Stellungsregler stromversorgungsseitig an der von dem Leitsystem lieferbaren Steuerspannung angeschlossen ist und dazu ausgebildet ist, bei Ausfall der Stromversorgung den pneumatischen Antrieb zu entlüften, und dass in dem Stellungsregler eine Routine zur Durchführung des Partial-Stroke-Tests sowie ein Wert für die Soll-Position des Ventils in der Betriebsstellung hinterlegt sind.

Bei der erfindungsgemäßen Stelleinrichtung entfällt das Magnetventil gänzlich, wobei der Stellungsregler seine Funktion übernimmt. Außerdem führt der Stellungsregler den Partial-Stroke-Test selbständig durch, um eine Schwergängigkeit oder Blockade des Ventils frühzeitig zu erkennen. Dabei benötigt der Stellungsregler keine Sollwertvorgabe, beispielsweise in Form eines 4-20 mA-Signals, so dass in diesem Fall bei dem Leitsystem auch keine teure Analogausgangsbaugruppe mehr erforderlich ist. Stattdessen ist der Wert für die Soll-Position des Ventils in seiner Betriebsstellung in dem Stellungsregler hinterlegt (einprogrammiert). Dieser Sollwert ist vorzugsweise um einen geringen Betrag kleiner als der Endanschlag des Ventils in der Betriebsstellung und beträgt z. B. 97% des Endanschlags. Die dem Sollwert entsprechende Ventilstellung versucht der Stellungsregler ständig zu regeln, bis ein Partial-Stroke-Test angefordert wird oder in einem Notfall der pneumatische Antrieb entlüftet wird, um das Ventil in die Sicherheitsstellung zu bringen. Dabei können für Regelventile (im Unterschied zu Auf/Zu-Ventilen) bekannte Diagnosefunktionen des Stellungsreglers wie die Überwachung der pneumatischen Leckage oder der Schwergängigkeit der Armatur genutzt werden, wodurch die Sicherheit weiter erhöht wird, weil durch die ständigen Ausregelvorgänge permanent ein mit dem Partial-Stroke-Test vergleichbarer Test im Kleinsignalbereich erfolgt.

Dadurch, dass bei der erfindungsgemäßen Stelleinrichtung keine Sollwertvorgabe, z. B. in Form eines 4-20 mA-Signals, erfolgt, wird in vorteilhafter Weise auch den Forderung einiger Anwender/Betreiber entsprochen, wonach bei Ausfall des 4-20 mA-Sollwertsignals für den Stellungsregler das Ventil nicht in die Sicherheitsstellung fahren soll.

Der Stellungsregler wird mit derselben Steuerspannung, in der Regel ein 24 V-Signal, gespeist, die bei dem Stand der Technik auch für das die Notabschalt-Funktion ermöglichende Magnetventil benötigt wird. Der Stellungsregler ist daher ein vollwertiger Ersatz für dieses Magnetventil. Wird die Steuerspannung abgeschaltet, entlüftet der Stellungsregler (beispielsweise der nach SIL2 zertifizierte SIEMENS-Stellungsregler SIPART PS2) den pneumatischen Antrieb, so wie dies beim Stand der Technik das Magnetventil tut. Statt zwei an der Armatur aus Ventil und Antrieb angebauten Aggregaten wird aber nur der Stellungsregler benötigt, der gleichzeitig die Magnetventilfunktion übernimmt. Dadurch vereinfacht sich die Verrohrung ebenso wie der Anbau an der Armatur, weil nur noch ein Aggregat anzubauen und anzuschließen ist. Das ursprünglich für das Magnetventil benötigte Kabel und die Stromversorgung dafür kann für den Stellungsregler weiterverwendet werden.

Da bei der erfindungsgemäßen Stelleinrichtung kein Magnetventil mehr vorhanden ist, entfällt natürlich auch dessen Test. Mehr noch: Durch die ständig in Funktion befindliche pneumatische Ausgangsstufe des Stellungsreglers, die kleine Regelabweichungen in der Betriebsstellung des Ventils ausregelt, ist die Gefahr eines "Festklebens" der pneumatischen Ausgangsventile des Stellungsreglers deutlich geringer als bei einem ständig in einer Stellung betriebenen Magnetventil.

Der Partial-Stroke-Test kann manuell über ein Bedienelement an dem Stellungsregler, durch ein Binärsignal, das z. B. von dem Leitsystem über einen Digitalausgang an einen Binäreingang des Stellungsregler gesendet wird, oder selbstständig von dem Stellungsregler in regelmäßigen Abständen durch einen in dem Stellungsregler enthaltenen Zeitgeber ausgelöst werden. Grundsätzlich kann der Partial-Stroke-Test auch über einen HART-Befehl (4-20 mA) vom Leitsystem aus gestartet werden, was jedoch dort eine Analogausgangsbaugruppe erfordern würde.

Die Auswertung des Partial-Stroke-Tests kann durch den Stellungsregler autark erfolgen, wobei die während des Partial-Stroke-Tests aufgenommenen Ist-Positionen des Ventils in einem Speicher des Stellungsreglers für Diagnosezwecke abgespeichert werden. Der Kurvenverlauf der Ist-Positionen kann dann z. B. lokal über ein Notebook mit z. B. PDM (Process Device Manager) ausgelesen und mit einer Referenzkurve verglichen werden. Nach Auswertung des Tests in einer Auswerteeinrichtung des Stellungsreglers kann das Testergebnis über einen vorzugsweise binären Signalausgang an das Leitsystem gemeldet werden. Die Meldung der bei dem Partial-Stroke-Test erreichten Ist-Position kann aber auch über einen Positionsmelder mit Kontakten oder in Form eines Näherungsschalters (z. B. Schlitzinitiator) weitergemeldet werden. Außerdem ist auch eine analoge Rückmeldung der Stellungsänderung des Ventils über z. B. eine 4-20 mA-Ausgangsstufe des Stellungsreglers möglich. Schließlich kann bei vorhandenen Kommunikationsschnittstellen wie HART oder Feldbus die Rückmeldung über die Kommunikationsschnittstellen an das Leitsystem erfolgen. Auch kann das Testergebnis auf einem Display des Stellungsreglers dargestellt werden.

Die Verfügbarkeit der erfindungsgemäßen Stelleinrichtung lässt sich in vorteilhafter Weise noch weiter dadurch verbessern, dass ein in der Druckluftversorgung für den Stellungsregler angeordneter Druckwächter mit einem Signaleingang des Stellungsreglers verbunden ist und dass der Stellungsregler dazu ausgebildet ist, bei Unterschreitung eines Mindestdrucks die Regelung einzustellen und die Be- und Entlüftung des pneumatischen Antriebs abzusperren. Alternativ kann ein Positionsgrenzwertmelder zur Meldung einer von der Betriebsstellung abweichenden Ist-Position des Ventils mit einem Signaleingang des Stellungsreglers verbunden werden und der Stellungsregler dazu ausgebildet sein, bei Überschreitung der Positionsabweichung die Regelung einzustellen und die Be- und Entlüftung des pneumatischen Antriebs abzusperren. Bei einer Störung der Druckluftversorgung mit der Folge eines zu geringen Versorgungsdrucks werden die pneumatischen Ausgangsventile des Stellungsreglers geschlossen, so dass der Stellungsregler nicht mehr vergeblich versucht, die Ventilstellung nachzuregeln, sondern statt dessen die vorhandene Druckluft in dem pneumatischen Antrieb einsperrt und so eine weitere Positionsänderung des Ventils von der Betriebsstellung weg verhindert.

Zur weiteren Erläuterung der Erfindung wird im Folgenden auf die Figuren der Zeichnung Bezug genommen, von denen
- Figur 1: eine Stelleinrichtung nach dem Stand der Technik und
- Figur 2: die ein Ausführungsbeispiel der erfindungsgemäßen Stelleinrichtung zeigt.

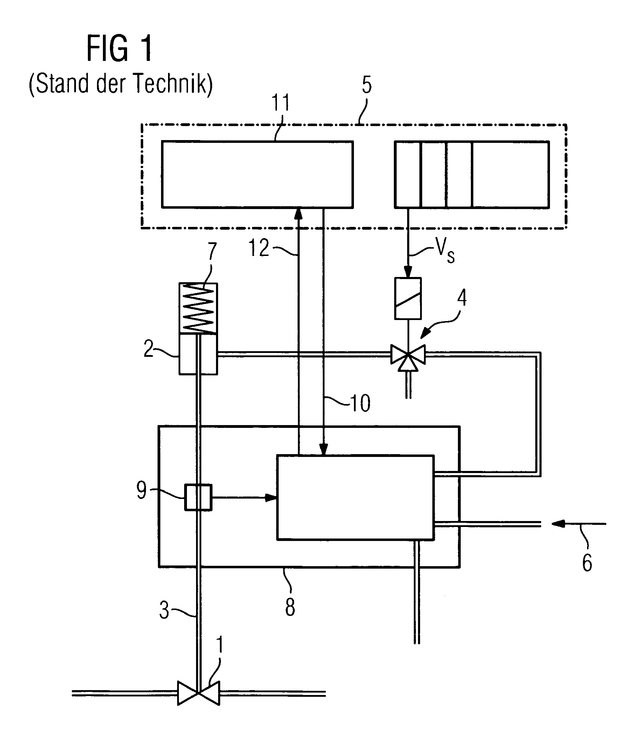

Die in Figur 1 gezeigte Stelleinrichtung nach dem Stand der Technik weist ein Auf/Zu-Ventil 1 auf, das mittels eines pneumatischen Antriebs 2 über ein Stellelement 3, hier in Form einer Hubstange, entweder in eine Betriebsstellung, z. B. "auf", oder eine Sicherheitsstellung, z. B. "zu", gebracht werden kann. Ein Magnetventil 4, das mit einer von einem Leitsystem 5 gelieferten Steuerspannung Vₛ angesteuert wird, verbindet den pneumatischen Antrieb 2 mit einer Druckluftversorgung 6. Im Notfall wird die Steuerspannung Vₛ abgeschaltet, um den pneumatischen Antrieb 2 über das Magnetventil 4 zu entlüften. Der pneumatische Antrieb 2 wird daraufhin drucklos und bewegt das Stellelement 3 mit dem Ventil 1, beispielsweise unter Einwirkung einer Feder 7, aus der Betriebsstellung in die Sicherheitsstellung wird.

Um die Funktionsfähigkeit der Stelleinrichtung im Rahmen eines Partial-Stroke-Tests überprüfen zu können, ist ein zusätzlicher Stellungsregler 8 pneumatisch zwischen das Magnetventil 3 und die Druckluftversorgung 6 geschaltet. Ein Positionsgeber 9 erfasst an dem Stellelement 3 die Ist-Position des Ventils 1 und führt sie dem Stellungsregler 8 zu, der in Abhängigkeit von der Ist-Position und einer vorgebbaren Soll-Position als Stellgröße einen variablen Ausgangsdruck einstellt, um über den pneumatischen Antrieb 2 das Ventil 1 in die Soll-Position zu bewegen. Um die Soll-Position vorzugeben, ist der Stellungsregler 8 über eine Kommunikationsverbindung 10, z. B. eine 4-20 mA-Leitung, mit einer Analogausgabebaugruppe 11 des Leitsystems 5 verbunden. Bei dem Partial-Stroke-Test wird das Ventil 1 mittels des Stellungsreglers 8 aus der Betriebsstellung über einen Teil seines Stellweges bewegt und anschließend wieder zurückbewegt. Die Stellungsänderung ist dabei so gering, dass der laufende Betrieb der Anlage, in der das Ventil 1 eingebaut ist, nicht unterbrochen werden muss und nur unwesentlich gestört wird. Während des beispielsweise von dem Leitsystem 5 automatisch in regelmäßigen Zeitabständen über die Kommunikationsverbindung 10 oder manuell über ein Bedienelement an dem Stellungsregler 8 ausgelösten Partial-Stroke-Tests wird die Stellbewegung des Ventils 1 erfasst, ggf. abgespeichert und über eine weitere Kommunikationsverbindung 12 an das Leitsystem 5 gemeldet, wo der Partial-Stroke-Test ausgewertet wird. Der Test wird in Abhängigkeit davon als erfolgreich bewertet, dass eine vorgegebene Stellungsänderung innerhalb einer Mindestzeit erreicht wird oder dass die Stellungsänderung innerhalb einer vorgegebenen Zeit einen Mindestwert erreicht. Auf diese Weise kann festgestellt werden, wenn das Ventil 4 blockiert ist oder zu langsam reagiert.

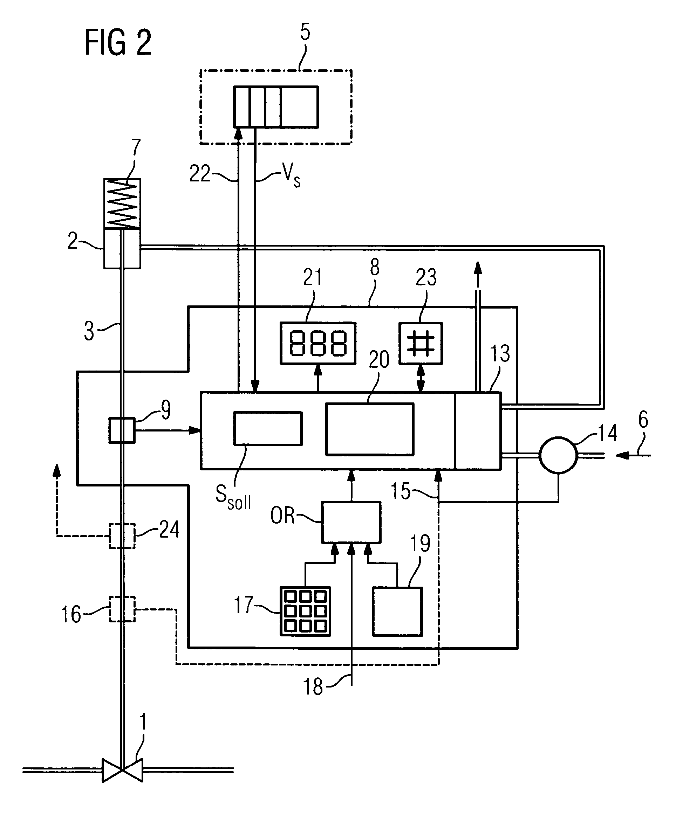

Das in Figur 2 dargestellte Ausführungsbeispiel der erfindungsgemäßen Stelleinrichtung unterscheidet sich von der in Figur 1 gezeigten Einrichtung nach dem Stand der Technik dadurch, dass der Stellungsregler 8 auch die Funktion des hier weggefallenen Magnetventils übernimmt und ohne Zwischenschaltung des Magnetventils mit dem pneumatischen Antrieb 2 verbunden ist. Der Wert sₛₒₗₗ für die Soll-Position des Ventils 1 in seiner Betriebsstellung ist in dem Stellungsregler 8 hinterlegt, so dass keine Sollwertvorgabe durch das Leitsystem 5 erforderlich ist. Der Stellungsregler 8 wird von dem Leitsystem 5 mit der Steuerspannung Vₛ gespeist. Fällt die Steuerspannung Vₛ aus oder wird sie abgeschaltet, so entlüftet der Stellungsregler 8 über seine pneumatische Ausgangsstufe 13 den pneumatischen Antrieb 2, so dass das Ventil 1 in die Sicherheitsstellung fährt. Solange die Steuerspannung Vₛ an dem Stellungsregler 8 anliegt, regelt dieser die Ventilstellung entsprechend dem hinterlegten Sollwert sₛₒₗₗ, der um einen geringen Betrag von beispielsweise 3% geringer als die Endstellung des Ventils 1 in seiner Betriebsstellung ist. Dadurch ist die Regelung ständig aktiv, was die Gefahr eines "Festklebens" der pneumatischen Ausgangsventile Ausgangsstufe 13 des Stellungsreglers 8 verringert. Um im Falle eines starken Druckabfalls in der Druckluftversorgung 6 zu verhindern, dass wegen der dann fehlenden Regelungsmöglichkeit das Ventil 1 zu sehr aus der Betriebsstellung fort bewegt, ist in der Druckluftversorgung 6 ein Druckwächter 14 angeordnet, der dem Stellungsregler 8 über einen Signaleingang 15 meldet, wenn ein Mindestdruck unterschritten wird. Der Stellungsregler 8 beendet dann seine Regelungsfunktion und sperrt stattdessen die Be- und Entlüftung des pneumatischen Antriebs 2 ab. Alternativ kann ein Positionsgrenzwertmelder 16 vorgesehen werden, der dem Stellungsregler 8 über den Signaleingang 15 meldet, wenn die Ist-Position des Ventils 1 zu sehr von dem Sollwert sₛₒₗₗ abweicht.

Der Partial-Stroke-Test kann wahlweise manuell über ein Bedienelement 17, durch ein Binärsignal an einem Signaleingang 18 des Stellungsreglers 8 oder in regelmäßigen Abständen durch einen in dem Stellungsregler 8 enthaltenen Zeitgeber 19 ausgelöst werden.

Zur Auswertung des Partial-Stroke-Tests enthält der Stellungsregler 8 eine Auswerteeinrichtung 20, die das Testergebnis auf einem Display 21 darstellt und/oder über einen vorzugsweise binären Signalausgang 22 an das Leitsystem 5 meldet. Die während des Partial-Stroke-Tests aufgenommenen Ist-Positionen des Ventils 1 werden in einem Speicher 23 des Stellungsreglers 8 für Diagnosezwecke abgespeichert. Die Meldung der bei dem Partial-Stroke-Test erreichten Ist-Position kann aber auch über einen Positionsmelder 24 beispielsweise in Form eines Näherungsschalters weitergemeldet werden.

Soweit eine Kommunikationsschnittstelle wir HART oder Feldbus vorhanden ist, können der Start des Partial-Stroke-Tests und das Auslesen der Testergebnisse zur weiteren Auswertung, Visualisierung oder Archivierung darüber erfolgen.

## Patentansprüche

1. Stelleinrichtung für ein Auf/Zu-Ventil (1), mit einem pneumatischen Antrieb (2), der in Abhängigkeit von dem Vorliegen oder Nichtvorliegen einer von einem Leitsystem (5) lieferbaren Steuerspannung (Vₛ) belüftet oder entlüftet wird und das Ventil (1) bei Belüftung in eine Betriebsstellung und bei Entlüftung in eine Sicherheitsstellung bewegt, und mit einem elektro-pneumatischen Stellungsregler (8), der zur Durchführung eines Partial-Stroke-Tests das Ventil (1) kurzzeitig über einen Teil seines Stellweges in eine Soll-Position bewegt, dabei die Ist-Position des Ventils (1) erfasst und in Abhängigkeit von der Ist-Position und der Soll-Position eine pneumatische Stellgröße für den pneumatischen Antrieb (2) erzeugt, **dadurch gekennzeichnet,**
**dass** der elektro-pneumatischen Stellungsregler (8) unmittelbar ohne Zwischenschaltung eines von der Steuerspannung (Vₛ) steuerbaren Magnetventils mit dem pneumatischen Antrieb (2) verbunden ist,
**dass** der Stellungsregler (8) stromversorgungsseitig an der von dem Leitsystem (5) lieferbaren Steuerspannung (Vₛ) angeschlossen ist und dazu ausgebildet ist, bei Ausfall der Stromversorgung den pneumatischen Antrieb (2) zu entlüften, und
**dass** in dem Stellungsregler (8) eine Routine zur Durchführung des Partial-Stroke-Tests sowie ein Wert für die Soll-Position des Ventils (1) in der Betriebsstellung hinterlegt sind.

2. Stelleinrichtung nach Anspruch 1, **dadurch gekennzeichnet, dass** der in dem Stellungsregler (8) hinterlegte Wert für die Soll-Position des Ventils (1) in der Betriebsstellung um einen geringen Betrag kleiner als der Endanschlag des Ventils (1) in der Betriebsstellung ist.

3. Stelleinrichtung nach Anspruch 1 oder 2, **dadurch gekennzeichnet, dass** der Stellungsregler (8) ein Bedienelement (17) zur Auslösung des Partial-Stroke-Tests aufweist.

4. Stelleinrichtung nach einem der vorangehenden Ansprüche, **dadurch gekennzeichnet, dass** der Stellungsregler (8) einen Signaleingang (18) zur Auslösung des Partial-Stroke-Tests aufweist.

5. Stelleinrichtung nach Anspruch 4, **dadurch gekennzeichnet, dass** der Signaleingang (18) ein Binäreingang ist.

6. Stelleinrichtung nach einem der vorangehenden Ansprüche, **dadurch gekennzeichnet, dass** der Stellungsregler (8) einen Zeitgeber (19) zur Auslösung des Partial-Stroke-Tests in regelmäßigen Zeitabständen aufweist.

7. Stelleinrichtung nach einem der vorangehenden Ansprüche, **dadurch gekennzeichnet, dass** der Stellungsregler (8) einen Speicher (23) zur Speicherung der während des Partial-Stroke-Tests aufgenommenen Ist-Positionen des Ventils (1) aufweist.

8. Stelleinrichtung nach einem der vorangehenden Ansprüche, **dadurch gekennzeichnet, dass** der Stellungsregler (8) eine Auswerteeinrichtung (20) zur Auswertung des Partial-Stroke-Tests und einen Signalausgang (22) zur Meldung des Testergebnisses aufweist.

9. Stelleinrichtung nach Anspruch 8, **dadurch gekennzeichnet, dass** der Signalausgang (22) ein Binärausgang ist.

10. Stelleinrichtung nach einem der vorangehenden Ansprüche, durch **gekennzeichnet durch** einen Positionsmelder (24) zur Meldung der bei dem Partial-Stroke-Test erreichten Ist-Position aufweist.

11. Stelleinrichtung nach einem der vorangehenden Ansprüche, **dadurch gekennzeichnet, dass** ein in der Druckluftversorgung für den Stellungsregler (8) angeordneter Druckwächter (14) mit einem Signaleingang (15) des Stellungsreglers (8) verbunden ist und dass der Stellungsregler (8) dazu ausgebildet ist, bei Unterschreitung eines Mindestdrucks die Regelung einzustellen und die Be- und Entlüftung des pneumatischen Antriebs (2) abzusperren.

12. Stelleinrichtung nach einem der Ansprüche 1 bis 10, **dadurch gekennzeichnet, dass** ein Positionsgrenzwertmelder (16) zur Meldung einer von der Betriebsstellung abweichenden Ist-Position des Ventils (1) mit einem Signaleingang (15) des Stellungsreglers (8) verbunden ist und dass der Stellungsregler (8) dazu ausgebildet ist, bei Überschreitung der Positionsabweichung die Regelung einzustellen und die Be- und Entlüftung des pneumatischen Antriebs (2) abzusperren.

## Claims

1. Actuating device for an on/off valve (1), having a pneumatic drive (2) which is pressurized or depressurized as a function of the presence or absence of a control voltage (Vₛ) supplied by a control system (5) and, when pressurized moves the valve (1) to an operating position and, when depressurized, moves the valve (1) to a safe position, and having an electropneumatic position regulator (8) which moves the valve (1) temporarily over a part of its actuating movement to a nominal position and a partial stroke test in this case records the actual position of the valve (1) and produces a pneumatic manipulated variable for the pneumatic drive (2) as a function of the actual position and nominal position, **characterized in that** the electropneumatic position regulator (8) is connected directly to the pneumatic drive (2), without the interposition of a solenoid valve which can be controlled by the control voltage (Vₛ),
**in that** the position regulator (8) is connected on the power supply side to the control voltage (Vₛ) which can be supplied by the control system (5) and is designed to depressurize the pneumatic drive (2) if the power supply fails,
and
**in that** a routine for carrying out the partial stroke test and also a value for the nominal position of the valve (1) in the operating position are stored in the position regulator (8).

2. Actuating device according to Claim 1, **characterized in that** the value which is stored in the position regulator (8) for the nominal position of the valve (1) in the operating position is a short distance away from the end stop of the valve (1) in the operating position.

3. Actuating device according to Claim 1 or 2, **characterized in that** the position regulator (8) has a control element (17) for initiating the partial stroke test.

4. Actuating device according to one of the preceding claims, **characterized in that** the position regulator (8) has a signal input (18) for initiating the partial stroke test.

5. Actuating device according to Claim 4, **characterized in that** the signal input (18) is a binary input.

6. Actuating device according to one of the preceding claims, **characterized in that** the position regulator (8) has a timer (19) for initiating the partial stroke test at regular time intervals.

7. Actuating device according to one of the preceding claims, **characterized in that** the position regulator (8) has a memory (23) for storing the actual positions of the valve (1) recorded during the partial stroke test.

8. Actuating device according to one of the preceding claims, **characterized in that** the position regulator (8) has an evaluation device (20) for evaluating the partial stroke test, and has a signal output (22) for signaling the test result.

9. Actuating device according to claim 8, **characterized in that** the signal output (22) is a binary output.

10. Actuating device according to one of the preceding claims, **characterized by** a position signal (24) for signaling the actual position reached during the partial stroke test.

11. Actuating device according to one of the preceding claims, **characterized in that** a pressure monitor (14) which is arranged in the compressed-air supply for the position regulator (8), is connected to a signal input (15) of the position regulator (8), and **in that** the position regulator (8) is designed to set the regulation when a minimum pressure is undershot, and to block the pressurization and depressurization of the pneumatic drive (2).

12. Actuating device according to one of Claims 1 to 10, **characterized in that** a position limit-value signaling device (16) for signaling an actual position of the valve (1) other than the operating position is connected to a signal input (15) of the position regulator (8), and **in that** the position regulator (8) is designed to set the regulation if the position discrepancy is exceeded, and to block the pressurization and depressurization of the pneumatic drive (2).

## Revendications

1. Dispositif de réglage d'une vanne (1) ouverte/fermée, comprenant un actionneur ( 2 ) pneumatique, qui est alimenté en air ou purgé en fonction de la présence ou de la non présence d'une tension ( Vₛ ) de commande pouvant être fournie par un système ( 5 ) de conduite, et la vanne ( 1 ) est mise, lorsqu'elle est alimentée en air, dans une position de fonctionnement et, lorsqu'elle est purgée, dans une position de sécurité, et comprenant un régleur (8) de position électropneumatique, qui, pour la mise en oeuvre d'un essai partial-stroke de la vanne ( 1 ), est déplacé brièvement sur une partie de sa course de réglage pour venir dans une position de consigne, la position réelle de la vanne (1) étant détectée et, en fonction de la position réelle et de la position de consigne, une grandeur pneumatique de réglage de l'actionneur ( 2 ) pneumatique étant produite, **caractérisé**
**en ce que** le régleur ( 8 ) électropneumatique de position est relié directement sans interposition d'une électrovanne pouvant être commandée par la tension (Vₛ) à l'actionneur ( 2 ) pneumatique,
**en ce que** le régleur (8) de position est raccordé à la tension ( Vₛ ) de commande pouvant être fournie par le système ( 5 ) de conduite et est constitué pour, s'il y a défaillance de l'alimentation en courant, purger l'actionneur ( 2 ) pneumatique, et
**en ce que**, dans le régleur ( 8 ) de position, sont mémorisés un programme pour la mise en oeuvre du test partial-stroke ainsi qu'une valeur de la position de consigne de la vanne ( 1 ) en la position de fonctionnement.

2. Dispositif de réglage suivant la revendication 1, **caractérisé en ce que** la valeur mémorisée dans le régleur ( 8 ) de position, pour la position de consigne de la vanne ( 1 ) dans la position de fonctionnement, est plus petite d'une petite valeur absolue que la butée de fin de course de la vanne ( 1 ) dans la position de fonctionnement.

3. Dispositif de réglage suivant la revendication 1 ou 2, **caractérisé en ce que** le régleur ( 8 ) de position comporte un élément ( 17 ) de commande, pour le déclenchement du test partial-stroke.

4. Dispositif de réglage suivant l'une des revendications précédentes, **caractérisé en ce que** le régleur ( 8 ) de position comporte une entrée ( 18 ) de signal, pour le déclenchement du test partial-stroke.

5. Dispositif de réglage suivant la revendication 4, **caractérisé en ce que** l'entrée ( 18 ) du signal est une entrée binaire.

6. Dispositif de réglage suivant l'une des revendications précédentes, **caractérisé en ce que** le régleur ( 8 ) de position comporte une horloge ( 19 ) de déclenchement du test partial-stroke à des intervalles de temps réguliers.

7. Dispositif de réglage suivant l'une des revendications précédentes, **caractérisé en ce que** le régleur ( 8 ) de position comporte une mémoire ( 23 ) de mémorisation des positions réelles de la vanne ( 1 ) enregistrées pendant le test partial-stroke.

8. Dispositif de réglage suivant l'une des revendications précédentes, **caractérisé en ce que** le régleur ( 8 ) de position comporte un dispositif ( 20 ) d'exploitation, pour l'exploitation du test partial-stroke, et une sortie ( 22 ) du signal, pour l'indication du résultat de l'essai.

9. Dispositif de réglage suivant la revendication 4, **caractérisé en ce que** la sortie ( 22 ) du signal est une sortie binaire.

10. dispositif de réglage suivant l'une des revendications précédentes, **caractérisé par** un indicateur ( 24 ) de position, pour indiquer la position réelle atteinte lors du test partial-stroke.

11. Dispositif de réglage suivant l'une des revendications précédentes, **caractérisé en ce qu'**un contrôleur ( 14 ) de pression, monté dans l'alimentation en air comprimé du régleur ( 8 ) de position, est relié à une entrée ( 15 ) de signal du régleur ( 8 ) de position et **en ce que** le régleur ( 8 ) de position est constitué pour, si l'on passe en dessous d'une pression minimum, établir la régulation et fermer l'alimentation en air et la purge de l'actionneur ( 2 ) pneumatique.

12. Dispositif de réglage suivant l'une des revendications 1 à 10, **caractérisé en ce qu'**un indicateur ( 16 ) de valeur limite de position, pour indiquer une position réelle de la vanne ( 1 ) s'écartant de la position de fonctionnement, est relié à une entrée ( 15 ) de signal du régleur ( 8 ) de position et **en ce que** le régleur ( 8 ) de position est constitué de manière, si l'écart de position est dépassé, à établir la régulation et à fermer l'alimentation en air et la purge de l'actionneur ( 2 ) pneumatique.
